# EUROPÄISCHE PATENTANMELDUNG

(11) **EP 1 398 477 A2**
(43) Veröffentlichungstag der Anmeldung: **17.03.2004**
(21) Anmeldenummer: 03015165.8
(22) Anmeldetag: 04.07.2003
(51) Int. Cl.: F02D 21/08, F02D 35/00, F02D 41/18

(54) **Verfahren und Vorrichtung zur Steuerung einer Brennkraftmaschine**

(30) Priorität: 03.09.2002 DE 10240479
(71) Anmelder: ROBERT BOSCH GMBH, 70442 Stuttgart (DE)
(72) Erfinder: Buck, Rainer, 71732 Tamm (DE); Bleile, Thomas, 70435 Stuttgart (DE); Forthmann, Stefan, 71640 Ludwigsburg (DE); Tichy, Birgit, 72622 Nuertingen (DE)

(57) **Zusammenfassung**

Ein Verfahren zur Steuerung einer Brennkraftmaschine (100) mit einem Steller, insbesondere einem Abgasrückführventil (118) zur Beeinflussung der Menge an rückgeführtem Abgas ist dadurch gekennzeichnet, daß die Differenz des in Strömungsrichtung oder gegen die Strömungsrichtung des Abgases in einer Abgasrückführleitung (116) über dem Steller gemessenen Drucks (Differenzdruck Δp) mit einer Sollgröße verglichen und ausgehend von diesem Vergleich eine Stellgröße zur Ansteuerung des Stellers gerechnet wird.

## Beschreibung

### Stand der Technik

Die Erfindung betrifft ein Verfahren und eine Vorrichtung zur Steuerung einer Brennkraftmaschine gemäß den Oberbegriffen der Ansprüche 1, 5 und 6.

Ein Verfahren und eine Vorrichtung zur Steuerung einer Brennkraftmaschine ist beispielsweise aus der DE 199 20 498 A1 bekannt. Dort werden ein Verfahren und eine Vorrichtung zur Steuerung einer Brennkraftmaschine mit einem Steller zur Beeinflussung der Menge an rückgeführtem Abgas beschrieben. Um bei einem solchen Verfahren und einer Vorrichtung zur Steuerung einer Brennkraftmaschine schädliche Emissionen zu reduzieren und um insbesondere die Genauigkeit der Regelung der Abgasrückführrate bzw. des Anteils an rückgeführtem Abgas zu verbessern, wird der Anteil an rückgeführtem Abgas durch Messung der angesaugten Frischluft geregelt. Die Regelung der Abgasrückführung durch Messung der angesaugten Frischluft erlaubt die Anpassung der rückgeführten Abgasmasse an den aktuellen Betriebspunkt der Brennkraftmaschine. Die Messung der angesaugten Frischluft erfolgt dabei durch einen Heißfilmluftmassenmesser (HFM). Der Einsatz eines solchen HFM ist nicht nur technisch aufwendig, sondern insbesondere auch teuer. Darüber hinaus existiert für Nutzkraftwagen-Anwendungen kein geeigneter HFM.

### Aufgabe der Erfindung

Der Erfindung liegt daher die Aufgabe zugrunde, ein Verfahren und eine Vorrichtung zur Steuerung einer Brennkraftmaschine der eingangs beschriebenen Art dahingehend weiterzubilden, daß eine Regelung der rückgeführten Abgasmasse ohne den Einsatz eines Heißfilmluftmassenmessers möglich ist.

### Vorteile der Erfindung

Diese Aufgabe wird bei einem Verfahren und bei einer Vorrichtung zur Steuerung einer Brennkraftmaschine mit den Merkmalen der unabhängigen Ansprüche 1, 5 und 6 gelöst.

Grundidee der Erfindung ist es, aufgrund der Differenz des Drucks, über dem Steller herrscht, das heißt des Differenzdrucks am Steller, auf die rückgeführte Abgasmenge zu schließen.

Durch Verwendung eines Differenzdruckmessers zur Messung des Differenzdrucks über dem Steller in der Abgasrückführleitung kann ein aufwendiger und teurer Heißfilmluftmassenmesser zur Messung der angesaugten Frischluft entfallen, da statt einer Messung der angesaugten Frischluft aufgrund des erfaßten Differenzdrucks auf den Anteil des rückgeführten Abgases und damit auf die Abgasrückführrate geschlossen werden kann.

Besonders vorteilhaft hierbei ist, daß das Meßsignal, das heißt der Differenzdruck direkt abhängig vom rückgeführten Abgasmassenstrom ist. Füllungstoleranzen der Brennkraftmaschine haben so keinen Einfluß auf die Erfassung der Abgasrückführrate. Auf diese Weise können auch sehr kleine Abgasrückführraten sehr genau eingestellt werden.

Weiterhin ist besonders vorteilhaft, daß kein zusätzlicher Strömungswiderstand in der Abgasrückführleitung erforderlich ist zur Messung des rückgeführten Abgasmassenstroms.

### Zeichnung

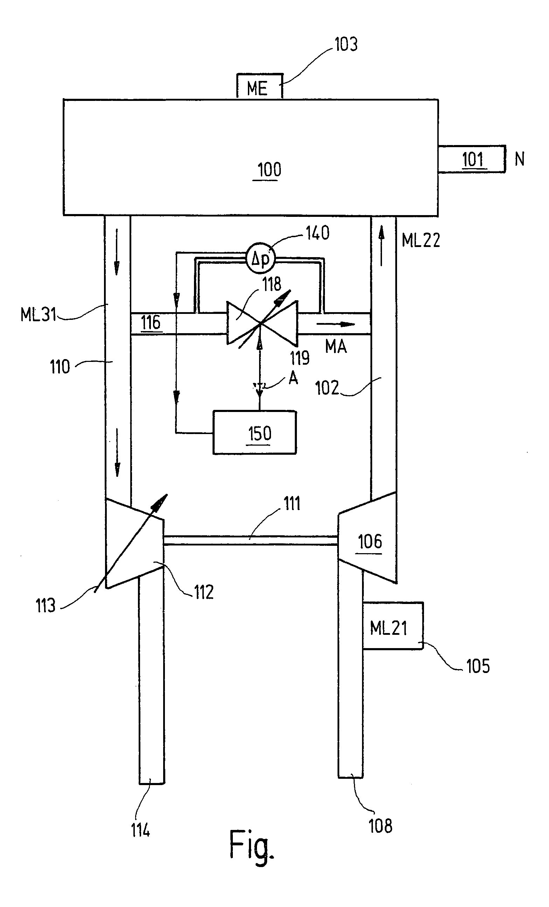

Weitere Vorteile und Merkmale der Erfindung werden nachstehend anhand der in der Zeichnung dargestellten Ausführungsform erläutert.

In der einzigen Figur der Zeichnung ist schematisch eine Brennkraftmaschine samt Luftsystem dargestellt, bei der das erfindungsgemäße Verfahren zum Einsatz kommt.

### Beschreibung der Ausführungsbeispiele

Nachfolgend wird das erfindungsgemäße Verfahren am Beispiel einer Dieselbrennkraftmaschine beschrieben. Die Erfindung ist aber nicht auf die Anwendung bei Dieselbrennkraftmaschinen beschränkt, sie kann auch bei anderen Brennkraftmaschinen, insbesondere auch bei direkteinspritzenden Benzinbrennkraftmaschinen zum Einsatz gelangen.

Einer Brennkraftmaschine 100 wird über eine Hochdruckfrischluftleitung 102 eine bestimmte Luftmenge ML22 zugeführt. Über eine Niederdruckfrischluftleitung 108 gelangt die Umgebungsluft zu einem Verdichter 106, beispielsweise einem Abgasturbolader oder einem Kompressor oder dergleichen und strömt in die auch als Ansaugrohr bezeichnete Hochdruckfrischluftleitung 102. Hierbei entspricht eine Luftmenge ML21, die durch die Niederdruckfrischluftleitung 108 strömt, der Luftmenge, die durch den Verdichter 106 strömt. Die Luftmenge ML21, die von außen, d.h. von der Umgebung in das Ansaugrohr strömt, wird beispielsweise mittels eines Luftmengenmessers 105 gemessen. Von der Brennkraftmaschine 100 strömt die Luftmenge ML31 in eine Hochdruckabgasleitung 110. Die Abgase gelangen von der Hochdruckabgasleitung 110 über eine Turbine 112 in eine Niederdruckabgasleitung 114, die auch als Auspuffleitung 114 bezeichnet wird. Die Turbine 112 treibt über eine Welle 111 den Verdichter 106 an. Mittels eines Laderstellers 113 kann der Wirkungsgrad der Turbine und damit des gesamten Laders beeinflußt werden. Zwischen der Hochdruckabgasleitung 110 und der Hochdruckfrischluftleitung 102 existiert eine Verbindung, die als Abgasrückführleitung 116 bezeichnet wird. Durch diese Abgasrückführleitung 116 strömt die Luftmenge MA. Der Querschnitt der Abgasrückführleitung 116 ist vorzugsweise mittels eines Stellgliedes 119 eines Abgasrückführventils 118 steuerbar. Zur Steuerung der Brennkraftmaschine 100 wird die Drehzahl N an der Kurbel- und/oder der Nockenwelle der Brennkraftmaschine 100 mittels eines Drehzahlsensors 101 erfaßt. Des weiteren sind Mengenstellglieder 103 vorgesehen, die die einzuspritzende Kraftstoffmenge ME, die der Brennkraftmaschine zugeführt wird, bestimmen. Hierzu werden die Stellglieder 103 mit einem Mengensignal ME beaufschlagt.

Zur genauen Steuerung der Brennkraftmaschine und insbesondere der Stellglieder 113 und 119 müssen verschiedene Größen bekannt sein. Insbesondere sollte das Verhältnis von Frischluft zu Abgas sowie die einzuspritzende Kraftstoffmenge ME, die der Brennkraftmaschine 100 zugeführt werden, bekannt sein. Durch das Verhältnis beispielsweise von Frischluft zu Abgas werden die Abgasemissionen, insbesondere die Rußemissionen besonders bei Dieselbrennkraftmaschinen beeinflußt.

Erfindungsgemäß erfolgt nun die Regelung des Stellglieds 119 durch Erfassen des Differenzdrucks Δp über dem Abgasrückführventil 118, das heißt der Differenz des in Strömungsrichtung oder entgegen der Strömungsrichtung des Abgases in der Abgasrückführleitung 116 herrschenden Drucks über dem Abgasrückführventil 118 mittels eines Differenzdruckmessers 140. Die Messung entgegen der Strömungsrichtung des Abgases dient zum Beispiel dazu, an bestimmten Betriebspunkten der Brennkraftmaschine Rückströmungen zu detektieren und im Bedarfsfall das Abgasrückführventil 118 zu schließen. Ein Ausgangssignal des Differenzdruckmessers 140 wird einer Steuereinrichtung 150, beispielsweise einer Motorsteuerung, zugeführt. Die Position des Stellglieds 119 wird dabei durch die Steuereinrichtung 150 solange verändert, bis der gemessene Differenzdruck Δp einem in der Steuereinrichtung 150 gespeicherten vorgebbaren Sollwert des Differenzdrucks entspricht. Hierzu wird die gemessene Istgröße des Differenzddrucks Δp mit Mitteln, die Teil des Steuergeräts 150 sind, bestimmt und sodann mit Vergleichsmitteln, die ebenfalls Teil des Steuergeräts 150 sind, mit einer Sollgröße verglichen. Ausgehend von diesem Vergleich wird mit einem Regler eine Stellgröße zur Ansteuerung des Stellglieds 119 bestimmt. Der Regler ist ebenfalls Teil des Steuergeräts 150. Statt der Realisierung in einem Steuergerät 150 ist es auch möglich, die Mittel zur Bestimmung des rückgeführten Abgases, die Vergleichsmittel und den Regler jeweils als separate Bauteile auszuführen (nicht dargestellt).

Durch die näherungsweise quadratische Abhängigkeit des Differenzdrucks Δp vom Massenstrom ist zusätzlich bei einem festen Strömungswiderstand der Meßbereich oder die Meßgenauigkeit bei kleinen Massenströmen stark eingeschränkt.

Die Messung des Differenzdrucks Δp hat den großen Vorteil, daß auch bei kleinen Massenströmen eine hohe Meßgenauigkeit erzielbar ist. Bei kleinen Massenströmen ist das Abgasrückführventil 118 fast geschlossen. Über dem kleinen Querschnitt treten daher auch bei kleinen Massenströmen ausreichende Druckdifferenzen auf, um diese mit an sich bekannten Differenzdruckmessern oder ähnlichen Sensoren ausreichend genau zu messen.

Große Massenströme dagegen werden durch ein weit geöffnetes Abgasrückführventil 118 erreicht. Über dem großen Querschnitt treten auch bei großen Massenströmen allerdings nur kleine Differenzdrücke Δp auf, wodurch der erforderliche Signalbereich des Differenzdrucksensors 140 begrenzt bleibt. Es kann mit anderen Worten ein Differenzdrucksensor 140 eingesetzt werden, der einen kleinen Meßbereich aufweist. Solche an sich bekannten Differenzdrucksensoren 140 weisen keinen technisch aufwendigen Aufbau auf, sie sind darüber hinaus auch kostengünstig.

Bei einem anderen erfindungsgemäßen Verfahren bei dem ein Abgasrückführventil 118 mit Lagerückmeldung, in der Figur gekennzeichnet durch den gepunktet gezeichneten Pfeil A, beispielsweise ein elektrisches Abgasrückführventil verwendet wird, kann aus der bekannten Position der effektive Querschnitt des Abgasrückführventils berechnet werden. Aus dem gemessenen Differenzdruck Δp und dem effektiven Querschnitt wird sodann der Abgasmassenstrom MA berechnet. In diesem Falle wird die Position des Stellglieds 119 durch die Steuereinrichtung 150 solange verändert, bis der rückgeführte Abgasmassenstrom MA einem in dem Steuergerät 150 abgespeicherten Sollwert entspricht. Hierdurch wird eine Steigerung der Präzision der Messung erreicht. Durch Erfassung der Position des Stellglieds 119 und der Berechnung des Öffnungsquerschnittes des Abgasrückführventils 118 auf Basis dieser Position ist es darüber hinaus möglich, die Sollgröße der Druckdifferenz in Abhängigkeit von dem Öffnungsquerschnitt zu Verändern, das heißt zu korrigieren, Auch hierdurch wird eine Steigerung der Meßgenauigkeit der zu bestimmenden rückgeführten Abgasmasse MA erreicht.

Eine Ausgestaltung des Verfahrens sieht vor, daß bei unterschiedlichen Betriebspunkten der Brennkraftmaschine jeweils den Differenzdruck Δp bei geschlossenem Stellglied 119 zu messen, in einen Speicher des Steuergeräts 150 zu speichern und hieraus jeweils eine den jeweiligen Arbeitspunkten zugeordnete Sollgröße zu bestimmen. Die Sollgrößen in jedem Arbeitspunkt werden dabei so gebildet, daß von dem bei geschlossenem Steller 119 gemessenen Differenzdruck ein vorgegebener Wert subtrahiert wird und das Ergebnis als Sollgröße des Differenzdrucks in dem Speicher des Steuergeräts 150 gespeichert wird. Die auf diese Weise ermittelten Sollwerte können beispielsweise in einem Kennfeld abgespeichert werden.

## Patentansprüche

1. Verfahren zur Steuerung einer Brennkraftmaschine (100) mit einem Steller, insbesondere einem Abgasrückführventil (118) zur Beeinflussung der Menge an rückgeführtem Abgas, **dadurch gekennzeichnet, daß** die Differenz des in Strömungsrichtung oder gegen die Strömungsrichtung des Abgases in einer Abgasrückführleitung (116) über dem Steller gemessenen Drucks (Differenzdruck Δp) mit einer Sollgröße verglichen und ausgehend von diesem Vergleich eine Stellgröße zur Ansteuerung des Stellers gerechnet wird.

2. Verfahren nach Anspruch 1, **dadurch gekennzeichnet, daß** die Position eines Stellgliedes (119) eines Abgasrückführventils (118) erfaßt und hieraus ein Öffnungsquerschnitt des Abgasrückführventils (118) berechnet und die Sollgröße in Abhängigkeit von dem Öffnungsquerschnitt verändert wird.

3. Verfahren nach Anspruch 1, **dadurch gekennzeichnet, daß** in unterschiedlichen Arbeitspunkten der Brennkraftmaschine jeweils der Differenzdruck (Δp) bei geschlossenem Steller gemessen, in einem Speicher gespeichert und hieraus jeweils eine den Arbeitspunkten zugeordnete Sollgröße des Differenzdrucks (Δp) bestimmt wird.

4. Verfahren nach Anspruch 3, **dadurch gekennzeichnet, daß** die Sollgrößen dadurch gebildet werden, daß von dem bei geschlossenem Steller (119) gemessenen Differenzdruck (Δp) ein vorgebbarer Differenzdruckwert abgezogen wird.

5. Verfahren zur Steuerung einer Brennkraftmaschine (100) mit einem Abgasrückführventil (118) zur Beeinflussung der Menge an rückgeführtem Abgas, **gekennzeichnet durch** folgende Schritte:
- es wird die Differenz des in Strömungsrichtung oder gegen die Strömungsrichtung des Abgases in einer Abgasrückführleitung (116) herrschenden Drucks über dem Abgasrückführventil (118) gemessen (Differenzdruck Δp);
- es wird die Position eines Stellgliedes (119) des Abgasrückführventils (118) erfaßt;
- aus der Position des Stellgliedes (119) wird mittels eines Models der Öffnungsquerschnitt des Abgasrückführventils (118) berechnet;
- aus dem Öffnungsquerschnitt und dem Differenzdruck (Δp) wird der rückgeführte Abgasmassenstrom bestimmt, mit einer Sollgröße verglichen und ausgehend von diesem Vergleich eine Stellgröße zur Ansteuerung des Stellgliedes (119) berechnet.

6. Vorrichtung zur Steuerung einer Brennkraftmaschine mit einem Steller, insbesondere einem Abgasrückführventil zur Beeinflussung der Menge an rückgeführtem Abgas mit Mitteln zur Bestimmung einer Istgröße, die die Menge an rückgeführtem Abgas **kennzeichnet**, mit Vergleichsmitteln, die diese Istgröße mit einer Sollgröße vergleichen, und mit einem Regler, der ausgehend von diesem Vergleich eine Stellgröße zur Ansteuerung des Stellers bestimmt, **gekennzeichnet durch** einen Differenzdruckmesser (140), mittels dessen der Druck über dem Steller (Differendruck Δp) gemessen und einem Steuergerät (150) zugeführt wird, **durch** welches nach Berechnung der Stellgröße mittels eines Modells der Steller betätigbar ist.
